# EUROPEAN PATENT APPLICATION

(11) **EP 1 561 923 A1**
(43) Date of publication of application: **10.08.2005**
(21) Application number: 04002549.6
(22) Date of filing: 05.02.2004
(51) Int. Cl.: F01P 11/04, G01K 1/14

(54) **Arrangement and method for attaching a sensor unit and an anti-tamper device therefore**

(71) Applicant: Ford Global Technologies, LLC, Dearborn, MI 48126 (US)
(72) Inventor: Alleving, Peter, 44140 Alingsas (SE); Unger, Anders, 43065 Rävlanda (SE); Bolander, Daniel, 41129 Göteborg (SE)
(74) Representative: Mossmark, Anders

(57) **Abstract**

The invention relates to an arrangement for attaching a sensor unit (9) to an outer surface of a heat exchanger device (2) comprising through holes for a gaseous medium. The sensor unit (9) is provided with a number of attachment and sensory projections (10,12) arranged to penetrate into said through holes, and where at least one of said projections (10,12) is provided with a frangible section. The invention further relates to a method for attaching said sensor and an anti-tamper device for a diagnostic unit monitoring at least one condition in an automotive vehicle.

## Description

### TECHNICAL FIELD

This invention relates to an arrangement for attaching a sensor unit to an outer surface of a heat exchanger device, as well as a method for attaching said sensor and an anti-tamper device for a diagnostic unit monitoring at least one condition in an automotive vehicle.

### BACKGROUND ART

Vehicle provided with various emission reducing equipment are subjected to a number of laws and regulations in different countries. For instance, the California Air Resources Board (CARB) can issue emission credits to vehicle manufacturers fulfilling a predetermined standard of emission.

One type of emission reducing equipment is an ozone reducing coating that may be applied to selected parts of the vehicle, for instance the radiator. One such coating used for direct ozone reduction (DOR) is manufactured by the Engelhardt Corporation ™ under the name Premair @. Presently a vehicle having a radiator provided with a DOR-coating is marked with an additional emission control label. The label informs a mechanic or a garage that the vehicle is provided with a DOR-radiator, which when removed must be replaced by a new or a replacement DOR-radiator. The air certificate for the vehicle in question will require that a DOR-radiator is mounted.

Further emission credits can be awarded if the vehicle is provided with some form of on-board diagnostics (OBD) for monitoring the function of the system. This can be achieved by mounting a temperature sensor on the radiator for transmission of a temperature signal to the engine control unit. As a DOR-coating will be active at temperatures above approximately 60°C, the radiator temperature is a good indicator if and for how long the process has been active during a driving cycle.

However, a problem with radiators of this type is that they are more expensive than a standard replacement radiator. When replacing the DOR-radiator, a user may be tempted to buy a standard radiator. In order to avoid an error message from the OBD-system it will also be necessary to remove the temperature sensor from the discarded DOR-radiator and mounting it on the replacement radiator.

The above problem is solved by the solution according to the invention, as the suggested anti-tampering device effectively prevents the sensor from being re-used if removed from the original radiator. The sensor will be provided with physical means for preventing its re-use in the same or a different vehicle.

### DISCLOSURE OF INVENTION

It is therefore an object of the present invention to provide a method and an apparatus that solves the above problems. This is achieved by an arrangement for attaching a sensor unit, according to claim 1, a method for attaching such a sensor unit, according to claim 15, and an anti-tamper device for a diagnostic unit, according to claim 16.

According to one embodiment the invention relates to an arrangement for attaching a sensor unit to an outer surface of a heat exchanger device comprising through holes for a gaseous medium, wherein the sensor unit is provided with a number of attachment and sensory projections arranged to penetrate into said through holes, and where at least one of said projections is provided with an anti-tampering device (ATD) in the form of a frangible section. The unit is preferably, but not necessarily, provided with one sensor projection and is attached by means of at least two attachment projections According to a further embodiment the sensor unit comprises an ATD and is contained in a box fitted with at least two attachment pins for attachment to a heat exchanger device in the form of a vehicle radiator. The pins may be inserted between adjacent radiator fins between coolant pipes running through the radiator. The attachment pins have a general size or diameter selected to fit between adjacent fins of a radiator with a force fit. For a standard passenger vehicle an average space between said fins may be approximately 3-4 mm in the horizontal direction with a height of approximately 7-10 mm in the vertical direction, when viewing the radiator from a direction at right angles from a vertical plane through the main body of the radiator. The length of the attachment pins should be sufficient to ensure secure attachment, but not longer than the thickness of the radiator itself. For a passenger vehicle this thickness may be 19-38 mm.

Depending on the choice of materials in the respective parts, the fins and/or the attachment pins may be deformed when the attachment pins are inserted into the radiator. This deformation will help to position, guide and attach the attachment pins and the ATD box to the radiator. The attachment pins may be provided with a grooved or patterned outer surface to increase friction and facilitate attachment to the fins of the radiator. The outer surface may be provided with barbs to prevent removal of the pins. To further improve the attachment, an adhesive such as glue can be used in the attachment process. The attachment pins may also be pointed or thinner at the tip to make the mounting of the ATD box easier. In addition, the attachment pins may be given a cross-section adapted to the shape and spacing between adjacent radiator fins.

The attachment pins are preferably made from a corrosion resistant material such as aluminium to minimize problems with corrosion between the attachment pins and the radiator during the lifetime of the radiator.

In addition to the attachment pins, the ATD comprises a thermo sensing pin, for sensing the temperature of the radiator. The sensor is part of an on-board diagnostics (OBD) system connected to an engine control unit (ECU). The sensor is arranged to transmit a temperature signal and an encrypted message to the ECU. The temperature signal is used for controlling the engine in order to keep the radiator at a temperature above 60°C so that the DOR-coating on the radiator is active. The encrypted signal is used to verify that the original sensor mounted on the radiator is transmitting the signal. The pin may be inserted between the fins in the same way as the attachment pins. The thermo sensing pin has a built-in weakness, or frangible section, so that a part of it snaps if an attempt is made to remove the ATD from the radiator. This weakness is preferably, but not necessarily, located inside the ATD box so that the sensor becomes unusable once the thermo sensing pin is broken.

The signal may be transmitted through an electrical wire, a CAN bus, by a wireless network or any other suitable means. The means of transmitting the signal is not part of the invention and will not be described in further detail.

According to an alternative embodiment, the said built-in weakness can be placed in one or more of the attachment pins, making it impossible to reattach the ATD box if removed from the radiator.

According to a further alternative embodiment, a built-in weakness can be provided at a suitable point along the length of the thermo sensing pin, where the pin is allowed to break off when removed. The remaining length attached to the ATD box should have no or significantly reduced thermo sensing properties, making it impossible to receive a useful reading from the sensor.

According to a further embodiment, the thermo sensing pin may be provided with an electrical circuit, such as an internal wire loop in the pin or at least one U-shaped clip in the attachment section adjacent or in the ATD box. The circuit is interrupted when the pin is broken off or disconnected from the ATD box during an attempt to remove the sensor.

According to a further alternative embodiment, the function of the thermo sensing pin is integrated into an attachment pin. Obviously, such an attachment pin will have a reduced capability for holding the ATD box in place due to it inherent weakness. The ATD box would therefore be fully supported and held in place by the remaining attachment pins. However, by giving the thermo sensing pin the appearance of an attachment and/or by varying its position on the ATD box, this feature can be used to make intentional tampering more difficult. Such a combined attachment and thermo sensing pin may be provided with one or more of the features listed above.

The thermo sensing pin may be made of aluminium to avoid corrosion and get a high thermal conductivity. It should also be geometrically designed to conform to the available space between the radiator fins and maximize the heat transfer. This geometrical design will be dependent on the shape of the available gaps or spaces between adjacent fins in each particular model and/or make of radiator.

The invention further relates to a method for attaching a sensor unit to an outer surface of a heat exchanger device comprising through holes for a gaseous medium by means of the arrangement of claim 1. This method involves the steps of:
- placing a number of attachment and sensory projections on the sensor unit in contact with the heat exchanger device at a predetermined location thereof;
- applying a force to the sensor unit and its projections, wherein at least one of said projections is provided with a frangible section, towards the heat exchanger device causing the projections to penetrate into and partially deform said through holes, and
- releasing said force when the sensor unit is positioned adjacent the outer surface of the heat exchanger device.

Finally, the invention relates to an anti-tamper device for a diagnostic unit monitoring at least one condition in an automotive vehicle, which diagnostic unit is connected to a sensor unit attached to a heat exchanger device comprising through holes for a gaseous medium by means of the arrangement of claim 1. The sensor unit is provided with a number of attachment and sensory projections arranged to penetrate into said through holes, and where at least one of said projections is provided with a frangible section, which frangible section is an anti-tamper device arranged to disable the sensor unit if broken.

According to one alternative embodiment the sensor unit is disabled in that the frangible section of a sensor projection is broken, preventing the transmission of a signal from the sensor unit to the OBD unit in the ECU.

According to a further alternative embodiment the sensor unit is disabled in that the frangible section of at least one attachment projection is broken, preventing reattachment of the sensor unit.

The above embodiments will be described in detail below. A common feature to all the above solutions is that the sensor becomes unusable when it is removed from the radiator. The ATD box should not be able to be removed and repositioned or reused on the same or a different vehicle.

The ATD box should block the air flow through the radiator in the area where it is mounted to reduce the cooling of the fins and thereby increase the heat conductivity from the coolant pipes in the radiator to the ATD via the thermo sensing pin.

By using the above solution for mounting an ATD, no modification of the radiator is needed and the ATD can be mounted in the vehicle assembly at either the pre- or post-production stage. Except for the ATD and the connectors, no extra hardware is needed.

One ATD design with the plug-in attachment as described above may be fitted to a number of different radiator designs without any hardware changes. Only in a small number of cases will the pin position and/or design have to be adjusted. The same attachment principle of the ATD can be used for all original equipment manufacturers. To prevent tampering the sensor should not be available on the aftermarket.

As old radiators in the aftermarket are sometimes repaired by changing only the radiator core, without the reservoirs and connections, the ATD should preferably be placed on the radiator core. The ATD should be placed in a position that ensures a good temperature response. For instance, a position between the coolant pipes close to the radiator coolant inlet is both on the radiator core and has sufficient temperature response.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic drawing of a passenger vehicle provided with a device according to the invention;
- Figure 2: shows a partial section of a vehicle radiator provided with a device according to the invention;
- Figure 3: shows a cross-section through a part of the radiator 5 and a schematically indicated ATD
- Figure 4A/B: shows a frangible pin according to one embodiment of the invention;
- Figure 5A/B: shows a frangible pin according to a further embodiment of the invention.

### MODES FOR CARRYING OUT THE INVENTION

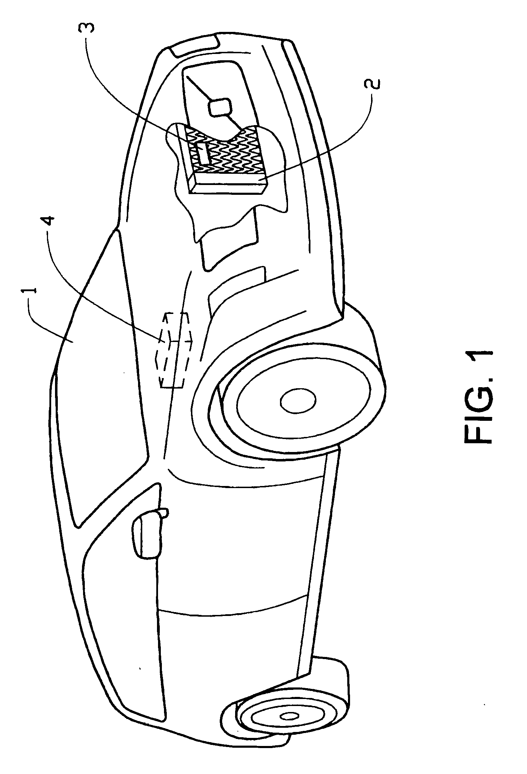

Figure 1 shows a schematic drawing of a passenger vehicle 1 with a partial section through the front section of an engine compartment. The section shows a part of a radiator 2 placed near the front of a vehicle, for cooling water used as a coolant in an internal combustion engine. The figure shows one possible location for attaching an anti-tampering device (ATD) 3 on the radiator 2. The ATD 3 is electrically connected to an on-board diagnostics unit (OBD) 4. This connection can be achieved via physical cables, a wireless transmitter or similar arrangements (not shown).

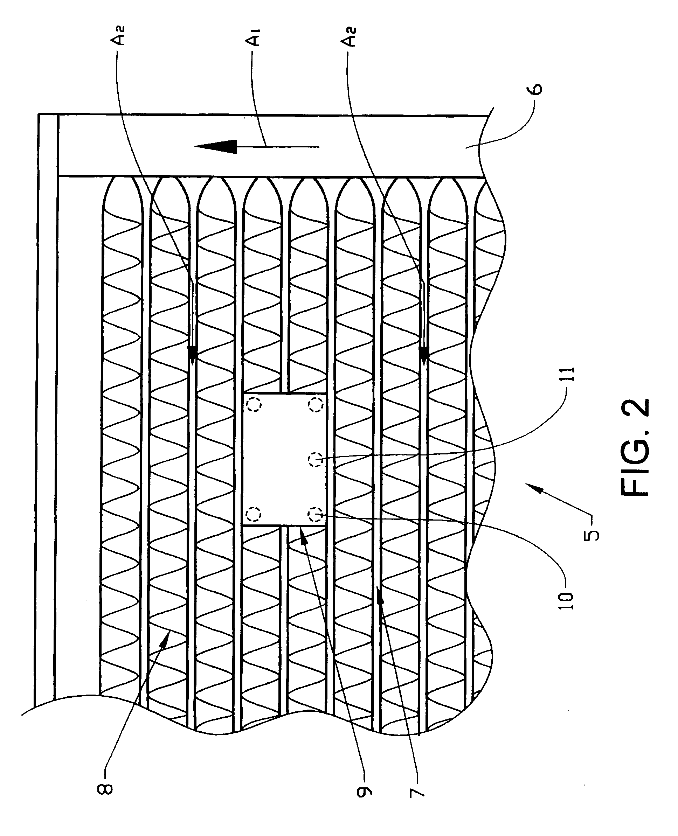

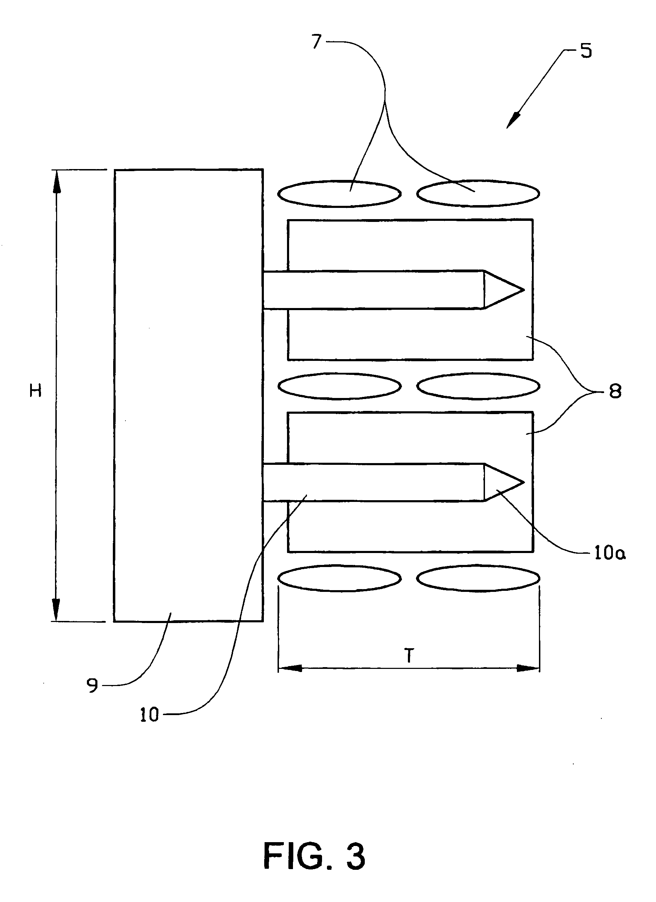

Figure 2 shows a partial section of a vehicle radiator 5 provided with an inlet tank 6 into which coolant from the engine enters the radiator, as shown by the arrow A1. The coolant flows from the inlet tank 6 to an outlet tank (not shown) through a number of coolant channels 7 placed at right angles to the main axial direction of the inlet tank 6 and outlet tank. The direction of flow through the coolant channels 7 is indicated by the arrows A2. A section of corrugated sheet metal fins 8 is arranged between each coolant channel 7. Each such section 8 extends between the inlet and outlet tanks and has its tips and valleys in contact with at least one pair of adjacent coolant channels 7, as shown in Figure 3. When the vehicle is moving, or when a cooling fan (not shown) is actuated, air flows through the corrugated fins 8 and cools the coolant flowing through the coolant channels 7. Attached to the radiator 5, adjacent the inlet tank 6, is an ATD 9 for monitoring the temperature of the coolant. In this embodiment the ATD 9 is attached by one attachment pin 10 in each corner. The temperature of the coolant is measured by a thermo sensing pin 11 placed between said attachment pins 10.

Figure 3 shows a cross-section through a part of the radiator 5 and a schematically indicated ATD 9. As can be seen from this figure, the corrugated fins 8 have a width substantially corresponding to the thickness T of the radiator 5. The radiator 5 shown in this embodiment has coolant channels 7 with a generally oval cross-section placed side-by-side between adjacent sections of corrugated fins 8. In this case the major axis of each coolant channel 7 has a dimension substantially equal to half the thickness T of the radiator 5. The ATD 9 is provided with rounded attachment pins 10 extending into through holes between adjacent corrugations of the corrugated fins 8. The length of the attachment pins 8 does not exceed the thickness T of the radiator 5. To facilitate insertion of the attachment pins 8 into the through holes, the tips 10a of the pins may be pointed.

The example shown in Figures 2 and 3 shows an ATD with four attachment pins, each having a generally rounded cross-section extending substantially through the entire radiator. Alternatively the ATD may be provided with any suitable number of pins, preferably from two to six pins, depending of the size and mass of the ATD. The pins may be given alternative cross-sections, such as triangular, square, or the like, ensuring a secure attachment of the ATD. For instance, two pins may be manufactured to a shape corresponding closely to the space between two adjacent fins in the corrugated section. In addition, the attachment pins may be given alternative lengths, preferably not less than half but not exceeding the entire thickness of the radiator. The attachment pins are preferably made from a corrosion resistant material such as aluminium to minimize problems with corrosion between the attachment pins and the radiator during the lifetime of the radiator.

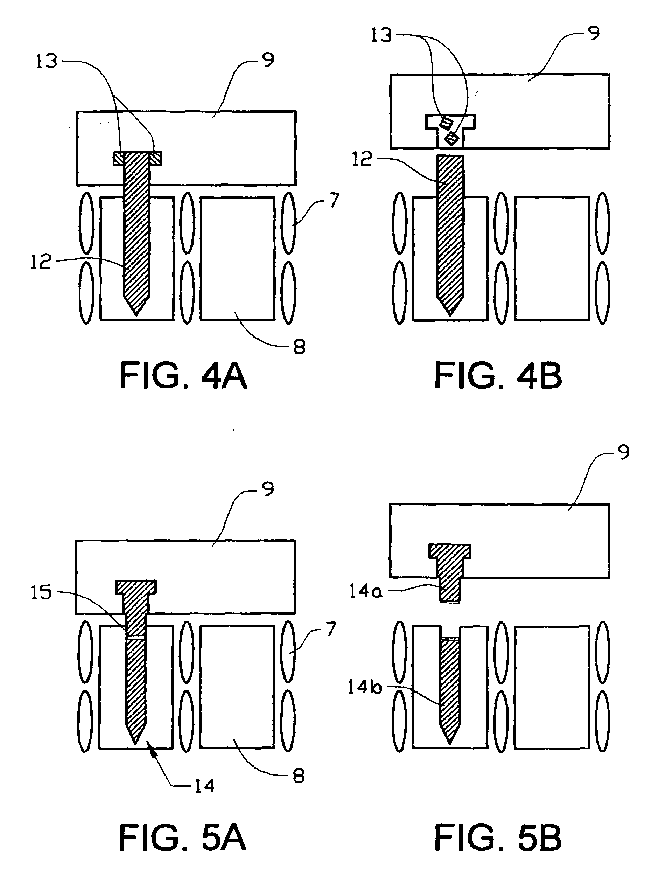

Figures 4A and 4B show a cross-section through an ATD with a thermo sensing pin according to a first embodiment of the invention.

The thermo sensing pin 12 is inserted between the fins 8 in the same way as the attachment pins (see Figs. 2 and 3) but it is not used to stabilize the ATD. The thermo sensing pin 12 has a built-in weakness, or frangible section, so that a part of it breaks off or snaps if an attempt is made to remove the ATD from the radiator. This weakness is preferably located inside the ATD 9 so that the ATD becomes unusable once the thermo sensing pin 12 is broken. Figure 4A shows a thermo sensing pin 12 having attachment means in the shape of a pair of projections 13 extending at right angles to the main extension of the thermo pin. The projections 13 are located in a pair of corresponding notches in the casing of the ATD, and are provided with a frangible weakened zone in the area where they join the thermo pin 12. These projections 13 are used both for attaching the pin 12 to the ATD 9, and for providing electrical contact between the sensor, thermo pin 12, and the electrical circuitry (not shown) in the ATD 9.

Figure 4B shows the ATD 9 after an attempt to remove it from the radiator. When pulling the attachment pins of the ATD 9 out of the radiator, the weakened zones on the thermo pin 12 will break, causing the projections 13 to snap off the body of the thermo pin 12. The ATD 9 can be removed, but the thermo pin 12 will remain in the radiator. Even if an attempt is made at reinserting the same, or a different, ATD onto the projecting thermo pin 12, the electrical contact between the pin and the ATD has been permanently broken.

Figures 5A and 5B show a cross-section through an ATD with a thermo sensing pin according to a second embodiment of the invention.

Similar to the embodiment of Figures 4A and 4B, the thermo sensing pin 14 has a built-in weakness, or frangible section 15, so that a part of it breaks off or snaps if an attempt is made to remove the ATD 9 from the radiator. This weakness is preferably located at a suitable point along the length of the thermo sensing pin 14, where a section 14b of the body of the pin is allowed to break off and remain in the radiator when the ATD is removed.

According to one preferred embodiment, the frangible section 15 is located near or a short distance inside the outer surface of the radiator. According to a further preferred embodiment, the frangible section 15 is located near or a short distance inside the casing of the ATD. In this way the ATD becomes unusable once the thermo sensing pin 14 is broken.

The frangible section 15 can be given a suitable design to prevent or at least reduce re-establishment of electrical contact between the broken section 14a and the broken off section 14b if the ATD is reinserted.

Alternatively, the embodiment of Figures 5A and 5B can be combined with the embodiment of Figures 4A and 4B, in order to prevent manipulation of the broken section 14a of the thermo pin 14.

According to a further alternative the built-in weakness can be placed in one of the attachment pins, or be disguised as an attachment pin.

The thermo sensing pin described in the above embodiments is made of aluminium to avoid corrosion and to provide a high thermal conductivity. It should also be geometrically designed to conform with the available space between radiator fins for maximizing the contact surface, and thus the heat transfer between radiator and pin.

The ATD blocks the air flow through the radiator in the area where it is mounted to reduce the cooling of the fins. This will increase the heat conductivity from the coolant pipes in the radiator to the ATD via the thermo sensing pin. A preferred positioning of the ATD is on the radiator core between the coolant pipes close to the radiator coolant inlet.

The invention is not limited to the embodiments described above and may be varied freely within the scope of the appended claims.

## Claims

1. Arrangement for attaching a sensor unit to an outer surface of a heat exchanger device comprising through holes for a gaseous medium, **characterized in that** the sensor unit is provided with a number of attachment and sensory projections arranged to penetrate into said through holes, and where at least one of said projections is provided with a frangible section.

2. Arrangement according to claim 1, **characterized in that** the unit is provided with one sensor projection.

3. Arrangement according to claim 2, **characterized in that** the unit is attached by means of at least two attachment projections

4. Arrangement according to claim 3, **characterized in that** the sensor projection is provided with a frangible section.

5. Arrangement according to claim 4, **characterized in that** the frangible section is located within the sensor unit.

6. Arrangement according to claim 4, **characterized in that** the frangible section is located on the sensor projection at a point between its base and tip.

7. Arrangement according to claim 4, **characterized in that** the sensor projection is provided with an electrical circuit passing through the frangible section.

8. Arrangement according to claim 3, **characterized in that** at least one attachment projection is provided with a frangible section.

9. Arrangement according to claim 2, **characterized in that** all projections are provided with a frangible section.

10. Arrangement according to any one of the above claims, **characterized in that** all projections are equal in size and shape.

11. Arrangement according to any one of the above claims, **characterized in that** said frangible section is arranged to break upon removal of the sensor unit from the heat exchanger.

12. Arrangement according to any one of the above claims, **characterized in that** the sensor is a temperature sensor.

13. Arrangement according to any one of the above claims, **characterized in that** the heat exchanger is a vehicle radiator.

14. Arrangement according to any one of the above claims, **characterized in that** the openings through the radiator is made up of layers of corrugated sheet metal.

15. Method for attaching a sensor unit to an outer surface of a heat exchanger device comprising through holes for a gaseous medium by means of the arrangement of claim 1, **characterized by** the steps of:
- placing a number of attachment and sensory projections on the sensor unit in contact with the heat exchanger device at a predetermined location thereof;
- applying a force to the sensor unit and its projections, wherein at least one of said projections is provided with a frangible section, towards the heat exchanger device causing the projections to penetrate into and partially deform said through holes, and
- releasing said force when the sensor unit is positioned adjacent the outer surface of the heat exchanger device.

16. Anti-tamper device for a diagnostic unit monitoring at least one condition in an automotive vehicle, which diagnostic unit is connected to a sensor unit attached to a heat exchanger device comprising through holes for a gaseous medium by means of the arrangement of claim 1, **characterized by** that the sensor unit is provided with a number of attachment and sensory projections arranged to penetrate into said through holes, and where at least one of said projections is provided with a frangible section, which frangible section is an anti-tamper device arranged to disable the sensor unit if broken.

17. Anti-tamper device according to claim 16, **characterized by** that the sensor unit is disabled in that the frangible section of a sensor projection is broken, preventing the transmission of a signal from the sensor unit to the diagnostic unit.

18. Anti-tamper device according to claim 16, **characterized by** that the sensor unit is disabled in that the frangible section of at least one attachment projection is broken, preventing reattachment of the sensor unit.
